# EUROPEAN PATENT SPECIFICATION

(11) **EP 2 311 328 B1**
(45) Date of publication and mention of the grant of the patent: **19.06.2013**
(21) Application number: 10186941.0
(22) Date of filing: 08.10.2010
(51) Int. Cl.: A23N 15/00

(54) **Device for removing a core from harvested heading plants**
Vorrichtung zur Entfernung eines Kerns aus geernteten Kopfpflanzen
Dispositif pour enlever un coeur de plantes tête récoltées

(30) Priority: 16.10.2009 NL 1037407
(43) Date of publication of application: 20.04.2011
(73) Proprietor: Ploeger Agro B.V., 4751 SG Oud Gastel (NL)
(72) Inventor: Van Beek, Cornelius Johannes Maria, 5104 PJ, Dongen (NL)
(74) Representative: Seezink, George

(56) References cited:
- FR-A1- 2 766 334
- US-A- 4 773 324
- US-A- 5 470 602
- US-A1- 2003 056 627
- US-A1- 2009 208 626

## Description

The invention relates to a device for removing a core from harvested heading plants comprising a stalk and, on said stalk, a head, such as in particular broccoli and cauliflower.

Such a device is known; in said device, the heading plants, such as broccoli, for example, are positioned on a conveyor belt comprising dishes; in a first operation, the plant stalk is removed, and in a second operation the core is removed or divided, so that only the florets, i.e. the closed buds in the case of broccoli and the springing buds in the case of cauliflower, remain. Although virtually the entire core can be eaten, it has little economic value, since consumers mainly confine themselves to using the florets of the broccoli and the cauliflower in the preparation of food.

A drawback of the known devices is that said devices, on account of the various operations that are to be carried out, do not separate the economically valuable parts of heading plants, such as cauliflower and broccoli, in an efficient manner.

A device for removing a core from harvested heading plants comprising a stalk is known from US-5.470.602. The preamble of claim 1 refers to the device disclosed in US-5.470.602.

Accordingly it is an object of the present invention to provide a more efficient device for removing a core from harvested heading plants.

This object is accomplished with the device according to the present invention as specified in claim 1.

The advantage of the device according to the present invention is that the commercially most valuable parts (the florets) of the heading plants, such as the closed buds in the case of broccoli, can be separated from the commercially less valuable parts of the heading plants, viz. the core and the stalk, by means of a single cutting movement of the separating element. This process being carried out in the device can take place in the field in a continuous mechanised process, in which the heading plants are harvested and subsequently their core is removed. Using the device according to the invention, the harvested plants are prepared for packaging in one step, for example for being sold in shops, or for further processing, for example the preparation of food products in which only the florets of the heading plants are needed, for example in the steam preparation of meals.

A special embodiment of the device according to the invention is characterised in that the separating element is arcuate in shape.

The separating element is arcuate in shape, preferably U-shaped, so as to conform to the shape of the core of heading plants, so that the florets can be cut from the core and be separated from the core with the stalk attached to the core in a single cutting movement.

Another embodiment of the device according to the invention is characterised in that the separating element is pivotable about an axis.

This is a relatively simple manner of having the arcuate separating element describe a relatively precise semicircular path.

Another embodiment of the device according to the present invention is characterised in that the separating means are provided with detection means and with an adjusting mechanism for adjusting the separating element relative to the plant to be separated in dependence on the position, the shape and the dimension of the plant detected by the detection means.

The detection means comprise detection means which are known per se, such as a camera and/or infrared measuring instruments, for example, by means of which the position, the shape and the dimension of the plant to be separated are determined. Depending on the result determined by the detection means, the separating element is positioned in any desired orientation relative to the plant present between the clamping means by means of the adjusting mechanism. Once positioned, the cutting movement between the first and the second position, or vice versa, is carried out, whereupon the adjusting mechanism will move the separating element with respect to the next clamped-down plant.

It is possible to provide a device with several separating elements, so that the productivity of the device can be increased.

Using the gripper, the plant coming from the clamping means can be reliably grasped, so that the plant can be cut by means of the separating element while being firmly fixed in place and being optimally positioned. The gripper is preferably provided with two pairs of gripping arms disposed one above the other for gripping the stalk of each plant at two spaced-apart positions. In this way the plant is firmly held and protected against tilting, for example while being cut.

The invention further relates to a method for removing a core from harvested heading plants, using a device as described in the foregoing.

Finally, the invention relates to a movable unit comprising a device as described in the foregoing. Such a unit is for example provided with wheels and with coupling means, via which the unit can be coupled to a tractor or the like. By moving the unit across the land by means of the tractor, it is possible to process the plants by means of the device according to the present invention immediately after they have been harvested.

The invention will now be explained in more detail on the basis of an embodiment shown in the appended drawings, in which:
Figure 1 is a top plan view of a device according to the present invention;
Figure 2 is a top plan view of a gripper of a device according to the present invention;
Figure 3 is a top plan view of the coupling device provided with a separating element of a device according to the present invention.

Like parts are indicated by the same numerals in the figures.

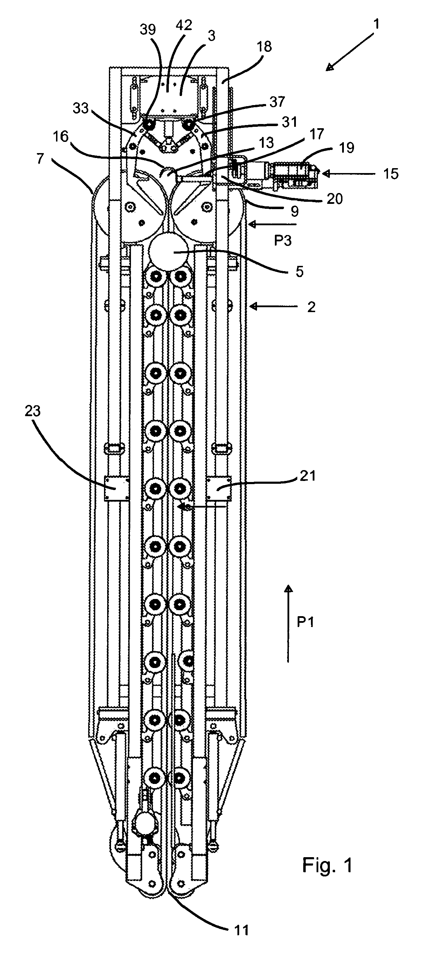

In figure 1 there is shown a device according to the present invention for removing a core from harvested heading plants 5, which plants 5 comprise a stalk and on said stalk a head. The present invention is in particular suitable for removing the cores from the heads with the stalks of broccoli and cauliflower.

The device 1 is provided with positioning means 2, 3 for positioning the plant 5. The positioning means 2, 3 comprise first clamping means in the form of clamping belts 7, 9 for clamping the stalk of the plant 5 therebetween. Using the clamping belts 7, 9, the plants 5 are transported from a starting position 11 of the clamping belts 7, 9 in the direction indicated by the arrow P1 to a separating position 13. Such clamping belts 7, 9 are known per se and will not be discussed in detail therein, therefore. The positioning means 2, 3 further comprise a second clamping element in the form of a gripper 3 disposed near the separating position 13, which functions to grip the plants being supplied by the clamping belts 7, 9.

The device 1 is further provided with separating means comprising a cutting device 15 disposed near the separating position 13, which cutting device comprises an arcuate or sickle-shaped separating element 16.

The separating element 16 is a cutting blade having one cutting edge with an upper surface and the lower surface (not shown), and in order to achieve a correct section it is important that the upper surface is shorter, seen in the longitudinal direction of the cutting blade, than the lower surface, so that the cutting blade comprises a triangular tip at the cutting edge, the virtual rectangle of which is formed by the lower surface of the cutting blade and a virtual line perpendicular thereto.

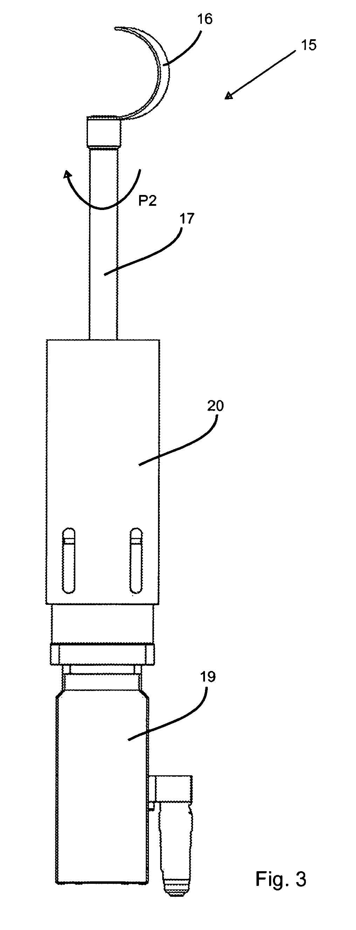

The separating element 16 is attached, via a rotary rod 17, to a motor unit 19 by means of which the sickle-shaped separating element can be pivoted about a pivot axis in the direction indicated by the arrow P2 (figure 3) and in the opposite direction between a first position and a second position, and vice versa. In the first position, in use, the separating element 16 is located on one side of the stalk of the plant 5, preferably the receiving position shown in figure 1, and in the second position the separating element 16 is located on the other side of the plant stalk. The pivoting movement of the separating element 16 comprises about 180 degrees. Between the motor unit 19 and the rotary rod 17, an adjusting mechanism 20 is mounted to a frame 18 of the device 1 for adjusting the height, which is done by moving the separating element 16 in a direction transversely to the plane of the drawing in figure 1 with respect to the plant 5 to be separated. The separating element 16 can furthermore be moved in the direction indicated by the arrow P1 and in the opposite direction over the frame 18 by means of the adjusting mechanism 20, and the adjusting mechanism 20 can move the separating element 16 in the direction indicated by the arrow P3 and in the opposite direction.

The separating means further comprise detection means 21, 23 as known per se, by means of which the position, the shape as well as the dimension of the plant 5 being transported in the direction indicated by the arrow P1 by means of the clamping belts 7, 9 can be determined. This information regarding the plants to be separated are transmitted, for example via a wireless connection, from the detection means 21, 23 to a processor (not shown) provided in the adjusting mechanism 20, under the control of which the adjusting mechanism 20 moves the separating element 16 with respect to the plant 5 to be separated to a correct position in dependence on the position, the shape as well the dimension of the plant 5 detected by the detection means 21, 23.

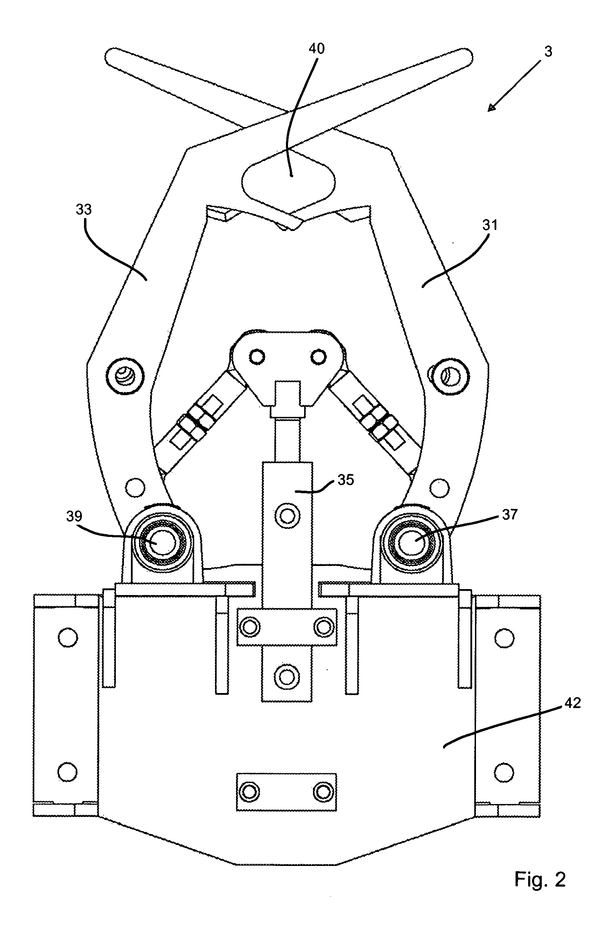

The gripper 3 grips the stalk of the plant 5 downstream of the clamping belts 7, 9, using two pairs (only one pair of which is shown in the figures) of gripping arms 31, 33 disposed one above the other for gripping the stalk of each plant 5 at two spaced-apart positions, so that the plant 5 is firmly and reliably grasped and positioned at the separating position 13. In total four gripping arms are provided, although only two gripping arms 31, 33 are shown in the figures. Each gripping arm 31, 33 can be pivoted about pivot pins 37, 39 by means of a pneumatic or hydraulic cylinder construction 35, from a position of the gripping arms 31, 33 as shown in figure 1 to a position of the gripping arms 31, 35 as shown in figure 2, in which the gripping arms define a closed space or passage 40 for accommodating the stalk of the plant 5. The shape of the gripping arms 31, 33 is such that the plant stalk is automatically passed from the clamping belts to the passage 40 to be formed by means of the gripping arms 31, 33. The arms 31, 33 are pivot-mounted to the stationary gripper frame 42. Furthermore mounted to the gripper frame 42 is the cylinder construction 35.

Once the plant 5 has been gripped at the separating position 13 by means of the gripper 5 and the plant 5 has been moved to within the U-shape of the separating element, which is in its first position (shown in figure 1), the separating element 13, after being correctly positioned by means of the detection means 21, 23 and the adjusting mechanism 20, is pivoted through about 180 degrees between the first position and the second position by means of the motor unit 19 and the rotary rod 17. During said pivoting movement from the first position to the second position of the separating element 16, a separation between the stalk with the core on the one hand and the remaining part of the plant on the other hand is effected, such that the commercially or economically valuable part of the plant is separated from the less valuable parts of the plant 5, viz. the core and the stalk. Using air pressure (generated wind), for example, the lighter, valuable parts of the plant 5 can be separated form the heavier, less valuable parts of the plant 5 after the separating operation, after all, the stalk is still connected to the core and this part of the plant is relatively large and heavy in comparison with the cauliflower or broccoli florets, for example. From the second position, the separating element 13 is preferably pivoted back to the first position, so that the next plant 5 can be received in the arch of the separating element.

The device 1 is preferably disposed in a mobile unit (not shown). Such a unit is for example provided with wheels and with coupling means, by means of which the unit can be coupled to a tractor or the like. It is possible to process the plants directly after harvesting, using the device 1 according to the invention, by moving the unit across the land by means of the tractor.

Alternatively, but not according to the invention, the device 1 comprises only the first clamping means in the form of clamping belts 7, 9, in which case the cutting device 15 will be positioned along the clamping belts 7, 9, between the starting position and the separating position 15 shown in the figures. In such a situation, the separating position 15 will no longer be disposed at the position shown in figure 1, of course. In this embodiment the plants 5 are directly separated on the clamping belt.

## Claims

1. A device (1) for removing a core from harvested heading plants comprising a stalk and, on said stalk, a head, such as in particular broccoli and cauliflower, which device is provided with positioning means (2) for positioning the plant, which positioning means comprise clamping means (7, 9) for clamping the plant stalk therebetween, and with separating means (15), which separating means comprise at least one separating element (16) which is movable between a first position and a second position, in which first position the separating element extends on one side of the stalk and in which second position the separating element extends on the other side of the stalk, for effecting a separation between the stalk with the core and the remaining part of the plant during movement of the separating element from the first position to the second position **characterised in that** the positioning means additionally comprise a gripper (3) for gripping the plant stalk downstream of the clamping means, after which the separating element can be moved between the first position and the second position.

2. A device (1) according to claim 1, **characterised in that** the separating element is arcuate in shape.

3. A device (1) according to claim 1 or 2, **characterised in that** the separating element is pivotable about an axis.

4. A device (1) according to any one of the preceding claims, **characterised in that** the separating means are provided with detection means and with an adjusting mechanism for adjusting the separating element relative to the plant to be separated in dependence on the position, the shape and the dimension of the plant detected by the detection means.

5. A device (1) according to claim 1, **characterised in that** the gripper is provided with two pairs of gripping arms (31, 33) disposed one above the other for /3 gripping the stalk of each plant at two spaced-apart positions.

6. A method for removing a core from harvested heading plants, using a device according to any one of claims 1-5.

7. A movable unit comprising a device (1) according to any one of claims 1-5.

## Patentansprüche

1. Vorrichtung (1) zum Entfernen eines Kerns von geernteten Kopfpflanzen mit einem Strunk und einem Kopf auf diesem Strunk, wie insbesondere Brokkoli und Blumenkohl, wobei die Vorrichtung mit Positionierungsmitteln (2) zum Positionieren der Pflanze und mit Trennmitteln (15) versehen ist, wobei die Positionierungsmittel Einspannmittel (7, 9) zum Einspannen des Pflanzenstrunks zwischen diesen umfassen und die Trennmittel wenigstens ein Trennelement (16) umfassen, das zwischen einer ersten Position und einer zweiten Position bewegbar ist, wobei sich das Trennelement in der ersten Position auf einer Seite des Strunks erstreckt und sich in der zweiten Position auf der anderen Seite des Strunks erstreckt, um während einer Bewegung des Trennelementes aus der ersten Position in die zweite Position eine Trennung des Strunkes mit dem Kern vom restlichen Teil der Pflanze zu bewirken, **dadurch gekennzeichnet, dass** die Positionierungsmittel zusätzlich einen Greifer (3) zum Greifen des Pflanzenstrunkes hinter den Einspannmitteln umfassen, woraufhin das Trennelement zwischen der ersten Position und der zweiten Position bewegt werden kann.

2. Vorrichtung (1) nach Anspruch 1, **dadurch gekennzeichnet, dass** das Trennelement bogenförmig ist.

3. Vorrichtung (1) nach Anspruch 1 oder 2, **dadurch gekennzeichnet, dass** das Trennelement um eine Achse drehbar ist.

4. Vorrichtung (1) nach einem der vorhergehenden Ansprüche, **dadurch gekennzeichnet, dass** die Trennmittel mit Erkennungsmitteln und mit einem Einstellmechanismus zum Einstellen des Trennelements relativ zu der zu trennenden Pflanze in Abhängigkeit von der von den Erkennungsmitteln erkannten Position, Form und Abmessung der Pflanze versehen sind.

5. Vorrichtung (1) nach Anspruch 1, **dadurch gekennzeichnet, dass** der Greifer mit zwei Paaren übereinander angeordneter Greifarme (31, 33) zum Greifen des Strunks jeder Pflanze an zwei beabstandeten Positionen versehen ist.

6. Verfahren zum Entfernen eines Kerns von geernteten Kopfpflanzen unter Verwendung einer Vorrichtung gemäß einem der Ansprüche 1 bis 5.

7. Bewegliche Einheit, die eine Vorrichtung (1) gemäß einem der Ansprüche 1 bis 5 umfasst.

## Revendications

1. Dispositif (1) permettant d'enlever un coeur de plantes à bourgeons récoltées comprenant une tige et, sur ladite tige, une tête, telle qu'en particulier le brocoli et le chou-fleur, lequel dispositif est pourvu de moyens de positionnement (2) permettant de positionner la plante, lesquels moyens de positionnement comprennent des moyens de serrage (7, 9) permettant de serrer la tige de la plante entre eux, et de moyens de séparation (15), lesquels moyens de séparation comprennent au moins un élément de séparation (16) qui est mobile entre une première position et une seconde position, dans laquelle première position l'élément de séparation s'étend sur un côté de la tige et dans laquelle seconde position l'élément de séparation s'étend sur l'autre côté de la tige, permettant d'effectuer une séparation entre la tige avec le coeur et la partie restante de la plante pendant le mouvement de l'élément de séparation de la première position vers la seconde position, **caractérisé en ce que** les moyens de positionnement comprennent en outre une pince (3) permettant de pincer la tige de la plante en aval des moyens de serrage, après quoi l'élément de séparation peut être déplacé entre la première position et la seconde position.

2. Dispositif (1) selon la revendication 1, **caractérisé en ce que** l'élément de séparation est de forme arquée.

3. Dispositif (1) selon la revendication 1 ou 2, **caractérisé en ce que** l'élément de séparation peut pivoter autour d'un axe.

4. Dispositif (1) selon l'une quelconque des revendications précédentes, **caractérisé en ce que** les moyens de séparation sont pourvus de moyens de détection et d'un mécanisme d'ajustement permettant d'ajuster l'élément de séparation par rapport à la plante à séparer en fonction de la position, de la forme et de la dimension de la plante détectée par les moyens de détection.

5. Dispositif (1) selon la revendication 1, **caractérisé en ce que** la pince est pourvue de deux paires de bras de pinçage (31, 33), l'une disposée au-dessus de l'autre pour pincer la tige de chaque plante en deux positions espacées.

6. Procédé permettant d'enlever un coeur de plantes à bourgeons récoltées, utilisant un dispositif selon l'une quelconque des revendications 1 à 5.

7. Unité mobile comprenant un dispositif (1) selon l'une quelconque des revendications 1 à 5.
